# NEUE EUROPÄISCHE PATENTSCHRIFT

(11) **EP 2 952 421 B2**
(45) Veröffentlichungstag und Bekanntmachung des Hinweises auf die Entscheidung über den Einspruch: **28.06.2023**
(45) Hinweis auf die Patenterteilung: 18.03.2020
(21) Anmeldenummer: 15161469.0
(22) Anmeldetag: 27.03.2015
(51) Int. Cl.: B62D 59/04

(54) **HILFSANTRIEB FÜR EINEN ANHÄNGER UND ANHÄNGER**
AUXILIARY DRIVE FOR A TRAILER AND TRAILER
ENTRAÎNEMENT D'ASSISTANCE POUR UNE REMORQUE ET REMORQUE

(30) Priorität: 31.03.2014 DE 202014101524 U
(43) Veröffentlichungstag der Anmeldung: 09.12.2015
(73) Patentinhaber: Reich KG, Regel- und Sicherheitstechnik, 35713 Eschenburg-Wissenbach (DE)
(72) Erfinder: Bender, Steffen, 35713 Eschenburg (DE)
(74) Vertreter: Hofstetter, Schurack & Partner

(56) Entgegenhaltungen:
- EP-A1- 1 764 274
- WO-A1-2011/131194
- DE-U1-202014 100 738
- FR-A1- 2 965 539
- GB-A- 2 457 725

## Beschreibung

Die vorliegende Erfindung betrifft einen Anhänger gemäß dem Oberbegriff des Anspruchs 1 umfassend mindestens einen Hilfsantrieb.

Hilfsantriebe für Anhänger, insbesondere für Wohnwagen, Bootsanhänger, Verkaufswagen, Transportanhänger und ähnliche Anhänger sind in einer großen Vielzahl bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich.

Bei Anhängern bestimmter Gewichtsklassen ist es vorgeschrieben, diese mit einem so genannten "Spritzschutzsystem" auszurüsten. Ein derartiges Spritzschutzsystem besteht dabei aus einer Radabdeckung, einer Schürze und einem Schmutzfänger. Der Schmutzfänger soll dabei verhindern, dass Steine, Spritzwasser und Schmutz von den Rädern des Anhängers auf nachfolgende Fahrzeuge geschleudert werden. Nachteilig an den bekannten Hilfsantrieben ist jedoch, dass bei der Montage der entsprechenden Antriebseinheiten des Hilfsantriebs hinter einer Achse des Anhängers der vorgeschriebene Schmutzfänger nicht montiert werden kann, da er sich zwischen den Antriebswalzen des Hilfsantriebs und den anzutreibenden Rädern des Anhängers befinden würde. Aus der DE 20 2014 100738 U1 sowie der gattungsgemäßen EP 1 764 274 A1 ist jeweils ein Schmutzfangelement bekannt, welches mit einem Hilfsantrieb für einen Anhänger zu einer Baugruppe integriert ist.

Es ist Aufgabe der vorliegenden Erfindung, einen gattungsgemäßen Anhänger, insbesondere einen Wohnwagen, einen Bootsanhänger, einen Verkaufswagen, einen Transportanhänger oder einen Autotransportanhänger mit mindestens einem Hilfsantrieb bereitzustellen, durch den ein vorgeschriebener Spritzschutz und gleichzeitig eine sichere Rangierfunktion gewährleistet ist.

Zur Lösung dieser Aufgaben dient ein Anhänger mit den Merkmalen des Anspruchs 1. Vorteilhafte Ausgestaltungen mit zweckmäßigen Weiterbildungen der Erfindung sind in den Unteransprüchen angegeben.

Ein Hilfsantrieb eines erfindungsgemäßen Anhängers gemäß Anspruch 1 ist an einem Rahmen des Anhängers angeordnet und umfasst mindestens ein Antriebselement, wobei das Antriebselement mit einem Rad des Anhängers in Eingriff bringbar ist. Des Weiteren umfasst der Hilfsantrieb mindestens ein Schmutzfangelement. Durch die Ausstattung des Hilfsantriebs mit mindestens einem Schmutzfangelement ist einerseits eine sichere Rangierfunktion mittels des Hilfsantriebs gewährleistet. Zudem ist es möglich, den vorgeschriebenen Spritzschutz mittels des Schmutzfangelements zu realisieren. Dabei ist eine Vielzahl von Ausgestaltungsmöglichkeiten des Schmutzfangelements, der Anzahl der Schmutzfangelemente wie auch der Befestigungsmöglichkeiten des Schmutzfangelements am Hilfsantrieb selbst oder auch am Anhänger möglich, wie im Folgenden näher ausgeführt wird. Ein weiterer Vorteil der im Folgenden beschriebenen Ausführungen des Hilfsantriebs ist, dass bei am Hilfsantrieb montierten bzw. integrierten Schmutzfangelementen keine Aufhängevorrichtung für diese am Anhänger vorhanden sein muss. Dies bedeutet neben Kostenvorteilen durch eine verminderte Teileanzahl und den Wegfall der Montage außerdem eine leichtere Nachrüstbarkeit und Verwendbarkeit für Anhänger die noch nicht mit einer entsprechenden Aufhängevorrichtung ausgerüstet sind bzw. bei denen eine solche konstruktiv nicht möglich ist. Der Hilfsantrieb weist zudem mindestens eine Antriebseinheit zum Antrieb des mindestens einen Antriebselements auf, wobei das Schmutzfangelement im Bereich zwischen der Antriebseinheit und dem Antriebselement, insbesondere einer Antriebswalze oder -rolle, angeordnet ist. Eine derartige Anordnung des Schmutzfangelements erweist sich als besonders vorteilhaft, da einerseits gewährleistet ist, dass das Schmutzfangelement nicht zwischen das Antriebselement und das mit dem Antriebselement in Eingriff zu bringende Rad des Anhängers ragt und andererseits die Positionierung des Hilfsantriebs an dem Rahmen des Anhängers in üblicher Weise durchgeführt werden kann. Dabei besteht zudem die Möglichkeit, dass das Schmutzfangelement derart ausgebildet ist, dass die Antriebseinheit des Hilfsantriebs gegenüber dem Rad zumindest teilweise abgeschirmt ist. Dabei kann das Schmutzfangelement die Antriebseinheit des Hilfsantriebs zumindest teilweise umschließen. Vorteilhafterweise werden durch diese Ausführungsformen des Schmutzfangelements die Antriebseinheit und sämtliche mechanischen und elektronischen Komponenten, wie beispielsweise Motoren, Anschwenkmotoren und -führungen sowie die Steuerelektronik des Hilfsantriebs vorder Gischt beziehungsweise dem Spritzwasser der Räder des Anhängers geschützt. Des Weiteren ist das Schmutzfangelement derart ausgebildet, dass zumindest ein Freiraum zwischen einem Radkasten und/oder einem Anhängerboden des Anhängers und dem Hilfsantrieb durch das Schmutzfangelement zumindest teilweise abgedeckt ist. Zudem kann die Breite des einzelnen Schmutzfangelementes oder die Breite mehrerer nebeneinander angeordneter Schmutzfangelemente zumindest ungefähr der Breite des gegenüberliegenden Rads bzw. Reifens des Anhängers entsprechen. Dadurch wird zuverlässig verhindert, dass Steine, Spritzwasser und Schmutz von dem entsprechenden Rad bzw. Reifen des Anhängers auf nachfolgende Fahrzeuge geschleudert werden. Es ist aber auch möglich, dass das Schmutzfangelement derart ausgebildet ist, dass ein Freiraum unterhalb des Hilfsantriebs in Richtung der Fahrbahn zumindest teilweise durch das Schmutzfangelement abgedeckt ist. Des Weiteren besteht die Möglichkeit, dass das Schmutzfangelement derart ausgebildet ist, dass sowohl der Freiraum zwischen dem Radkasten des Anhängers und dem Hilfsantrieb sowie der Freiraum unterhalb des Hilfsantriebs jeweils zumindest teilweise durch das Schmutzfangelement abgedeckt sind. Auch durch derartige Ausgestaltungen lässt sich zuverlässig verhindern, dass im normalen Fahrbeziehungsweise Straßenbetrieb des Anhängers Steine, Spritzwasser und Schmutz von den Rädern des Anhängers auf nachfolgende Fahrzeuge geschleudert werden.

Erfindungsgemäß ist ein in den Radkasten des Anhängers ragender Bereich des Schmutzfangelements zumindest bereichsweise einer Kontur der Innenseite des Radkastens in diesem Bereich angepasst. Dabei besteht die Möglichkeit, dass der in den Radkasten ragende Bereich des Schmutzfangelements bei einem Nichtanliegen des Antriebselements an dem Rad an der Innenkontur des Radkastens in diesem Bereich vollflächig anliegt. Vorteilhafterweise ist das Schmutzfangelement des Hilfsantriebs zumindest bereichsweise der Innenkontur des Radkastens in diesem Bereich angepasst, sodass nach einem Abschwenken des Antriebselements von dem anzutreibenden Rad sich das Schmutzfangelement an die Innenkontur des Radkastens anschmiegt und somit einen optimalen Spritzschutz gewährleistet.

In einer weiteren vorteilhaften Ausgestaltung des erfindungsgemäßen Anhängers ist zumindest ein in einen Radkasten des Anhängers ragender Bereich des Schmutzfangelements oder ein an einem Anhängerboden anliegender Bereich des Schmutzfangelements zumindest bereichsweise flexibler ausgebildet als die am Hilfsantrieb anliegenden Bereiche des Schmutzfangelements und/oder als ein von dem Hilfsantrieb bodenseitig abragender Bereich des Schmutzfangelements. Dadurch ist es vorteilhafterweise möglich, dass sich der genannte Bereich des Schmutzfangelements beim Abschwenken des Hilfsantriebs dem Radkasten des Anhängers anpasst beziehungsweise sich an dessen Innenkontur anschmiegt und somit wiederum einen optimalen Spritzschutz gewährleistet.

In weiteren vorteilhaften Ausgestaltungen des erfindungsgemäßen Anhängers ist das Schmutzfangelement als separates Bauteil ausgebildet und am Hilfsantrieb angeordnet. Dadurch ergibt sich vorteilhafterweise die Möglichkeit bereits bestehende Hilfsantriebe mit dem Schmutzfangelement nachzurüsten. Das Schmutzfangelement kann dabei mit dem Hilfsantrieb verschraubt, verklebt oder verschweißt werden oder ist auf den Hilfsantrieb aufgesteckt, aufgeschoben, aufgespannt oder aufgeschrumpft oder mit diesem verklemmt. Auch weitere Befestigungsmöglichkeiten sind denkbar. Zudem besteht die Möglichkeit, dass der Hilfsantrieb mindestens eine Montagevorrichtung zur Befestigung des Schmutzfangelements und/oder des Hilfsantriebs aufweist.

In weiteren vorteilhaften Ausgestaltungen des erfindungsgemäßen Anhängers ist das Schmutzfangelement einstückig mit dem Hilfsantrieb ausgebildet. Dadurch kann vorteilhafterweise auf einen separaten Montagevorgang des Schmutzfangelements an dem Hilfsantrieb verzichtet werden. Es ergeben sich Kostenvorteile durch die verminderte Anzahl an Bauteilen und den Wegfall der Montage. Dabei kann das Schmutzfangelement einstückig mit einem Gehäuse des Hilfsantriebs oder einem Gehäuse der Antriebseinheit, einer Halterung oder einem Gehäuse des Antriebselements oder einem eine Anpresskraft auf das Rad übertragendes Gehäuseelement des Hilfsantriebs ausgebildet sein.

In weiteren vorteilhaften Ausgestaltungen des erfindungsgemäßen Anhängers ist das mindestens eine Schmutzfangelement mit dem Anhänger verbunden, wobei das Schmutzfangelement mindestens eine Öffnung und/oder Aussparung umfasst, durch die der Hilfsantrieb führbar ist. Eine derartige erfindungsgemäße Konstruktion ermöglicht es, insbesondere bereits montierte Hilfsantriebe mit einem Schmutzfangelement nachzurüsten. Die Öffnung und/oder die Aussparung in dem Schmutzfangelement ist dabei vorteilhafterweise der Außenkontur des Hilfsantriebs angepasst, sodass der Hilfsantrieb beim Anpressen an das Rad des Anhängers durch diese hindurch geführt werden kann. Zugleich deckt der Hilfsantrieb in abgeschwenktem Zustand die Öffnung und/oder Aussparung nahezu vollständig oder vollständig ab, sodass der geforderte Spritzschutz erreicht wird. Des Weiteren besteht die Möglichkeit, dass das Schmutzfangelement im Bereich der Öffnung und/oder der Aussparung zumindest teilweise eine Dichtlippe aufweist oder zumindest teilweise von dieser umgeben ist. Dadurch ist wiederum gewährleistet, dass große Bereiche des Hilfsantriebs, insbesondere die Antriebseinheit des Hilfsantriebs vor Steinen, Spritzwasser und Schmutz geschützt wird. Zur leichteren Hindurchführung des Hilfsantriebs durch die Öffnung und/oder Aussparung des Schmutzfangelements kann dieses im Bereich um die Öffnung und/oder Aussparung aus einem Material gefertigt sein, welches gute bzw. hohe Gleiteigenschaften besitzt oder kann zumindest teilweise mit einem Material mit hohen Gleiteigenschaften umgeben sein. Des Weiteren besteht die Möglichkeit, dass an der Öffnung und/oder Aussparung zumindest teilweise ein separates Element bestehend aus einem Material mit hohen Gleiteigenschaften angeordnet ist. Dadurch wird vorteilhafterweise das Hindurchführen des Hilfsantriebs durch die Öffnung und/oder Aussparung des Schmutzfangelements deutlich erleichtert. Ein "Hängenbleiben" oder "Verkanten" des Schmutzfangelements beim Hindurchführen des Hilfsantriebs wird zuverlässig verhindert. In weiteren vorteilhaften Ausgestaltungen kann das Schmutzfangelement mit dem Rahmen des Anhängers und/oder dem Anhängerboden und/oder dem Radkasten des Anhängers verbunden sein.

In weiteren vorteilhaften Ausgestaltungen des erfindungsgemäßen Anhängers kann das Schmutzfangelement ein- oder mehrteilig ausgebildet sein. Vorteilhafterweise richtet sich die Ausgestaltung des Schmutzfangelements nach den Gegebenheiten im Bereich der Räder beziehungsweise der Radkästen des Anhängers oder der Kontur des Anhängerbodens in diesem Bereich.

In weiteren vorteilhaften Ausgestaltungen des erfindungsgemäßen Anhängers besteht das Schmutzfangelement aus Kunststoff, Metall, Gummi oder einer Kombination von mindestens zwei dieser Materialien. Auch andere Materialien zur Herstellung des Schmutzfangelements sind denkbar. Bei einer einstückigen Ausgestaltung des Schmutzfangelements wie zum Beispiel dem Gehäuse des Hilfsantriebs richtet sich das Material des Schmutzfangelements natürlich nach dem Material des Gehäuses des Hilfsantriebs und umgekehrt.

In einer weiteren vorteilhaften Ausgestaltung des erfindungsgemäßen Anhängers ist mindestens ein weiteres am Anhänger angeordnetes Schmutzfangelement im Bereich des Hilfsantriebs angeordnet. Diese erfindungsgemäße Ausführungsform ist insbesondere bei Anhängern mit sehr breiten Reifen vorteilhaft, da mindestens ein zusätzliches Schmutzfangelement am Anhänger befestigt ist um in der abgeschwenkten Position des Hilfsantriebs einen ausreichend breiten Spritzschutz zu gewährleisten. Dabei kann das zusätzliche Schmutzfangelement an dem Rahmen des Anhängers, dem Radkasten des Anhängers, dem Anhängerboden oder anderen Bauelementen des Anhängers in diesem Bereich montiert sein. Das zusätzliche Schmutzfangelement kann dabei neben dem Schmutzfangelement des Hilfsantriebs angeordnet sein, das heißt es kann in Richtung einer Mitte des Anhängers oder in Richtung der Außenseite des Anhängers neben dem Schmutzfangelement des Hilfsantriebs montiert werden. Dabei können natürlich zusätzlich zu dem Schmutzfangelement des Hilfsantriebs für jedes Rad des Anhängers jeweils ein zusätzliches inneres und ein äußeres Schmutzfangelement am Anhänger angeordnet sein.

Der Anhänger kann ein Wohnwagen, Bootsanhänger, Verkaufswagen, Transportanhänger oder Autotransportanhänger sein.

Weitere Vorteile, Merkmale und Einzelheiten der Erfindung ergeben sich aus der nachfolgenden Beschreibung mehrerer Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder in Alleinstellung verwendbar, ohne den Rahmen der Erfindung zu verlassen.

Es zeigen
- Figur 1: eine schematische Schnittdarstellung eines erfindungsgemäßen Anhängers gemäß einer ersten Ausführungsform mit einem Hilfsantrieb in einem zugeschwenkten Zustand;
- Figur 2: eine schematische Schnittdarstellung des erfindungsgemäßen Anhängers gemäß Figur 1 mit dem Hilfsantrieb in einem abgeschwenkten Zustand;
- Figur 3: eine schematische Darstellung eines weiteren Hilfsantriebs;
- Figur 4: eine schematische Darstellung eines weiteren Hilfsantriebs;
- Figur 5: eine schematische Darstellung eines weiteren Hilfsantriebs;
- Figur 6: eine schematische Darstellung eines weiteren Hilfsantriebs;
- Figur 7: eine schematische Schnittdarstellung eines weiteren Hilfsantriebs in einem zugeschwenkten Zustand;
- Figur 8: eine schematische Schnittdarstellung des Hilfsantriebs gemäß Figur 7 in einem abgeschwenkten Zustand; und
- Figur 9: eine schematische Darstellung eines weiteren Hilfsantriebs in zugeschwenkten Zustand.

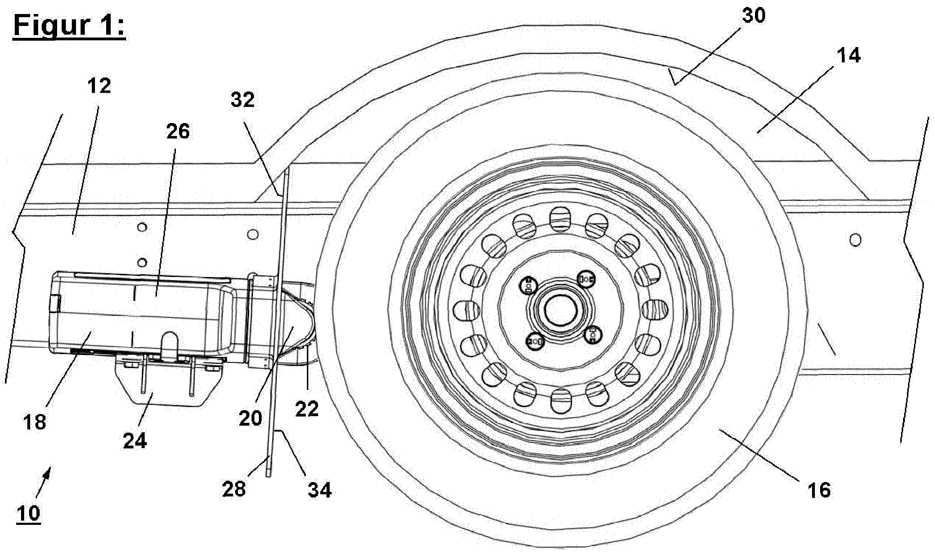

Die Figur 1 zeigt eine schematische Schnittdarstellung eines Anhängers, insbesondere eines Wohnwagens, mit einem Hilfsantrieb 10. Unter Anhänger werden aber zudem beispielsweise Bootsanhänger, Verkaufswagen, Transportanhänger oder Autotransportanhänger und ähnliche Anhänger verstanden. Man erkennt, dass der Hilfsantrieb 10 an einem Rahmen 12 des Anhängers mittels einer Montagevorrichtung 24 angeordnet ist. In dem dargestellten Ausführungsbeispiel ist der Hilfsantrieb 10 an einem Längsträger des Rahmens 12 befestigt. Der Hilfsantrieb 10 umfasst dabei eine Antriebseinheit 18 und ein Antriebselement 22, wobei das Antriebselement 22 als Antriebswalze ausgebildet ist. Das Antriebselement 22 ist in einer Gehäusehalterung 20 drehbar gelagert. In Figur 1 ist der Hilfsantrieb 10 in einem zugeschwenkten Zustand dargestellt. Dies bedeutet, dass das Antriebselement 22 in Eingriff mit einem Rad 16 des Anhängers steht. Durch eine Drehung des Antriebselements 22 wird das Rad 16 bewegt. Die Antriebseinheit 18 umfasst zudem elektronische und elektrische Komponenten des Hilfsantriebs 10, wie zum Beispiel den Motor für das Antriebselement 22 sowie Anschwenkmotoren und -führungen sowie die Steuerelektronik des Hilfsantriebs 10 (nicht dargestellt). Die zuletzt genannten Komponenten sind innerhalb eines Gehäuses 26 des Hilfsantriebs 10 angeordnet. Das An- und Abschwenken des Antriebselements 22 erfolgt durch ein entsprechendes Verschieben des Hilfsantriebs 10 relativ zum Rahmen 12 des Anhängers.

Des Weiteren erkennt man, dass am Hilfsantrieb 10 ein Schmutzfangelement 28 angeordnet ist. In dem dargestellten Ausführungsbeispiel ist dabei das Schmutzfangelement 28 derart ausgebildet, dass zumindest ein Freiraum zwischen einem Radkasten 14 des Anhängers und dem Hilfsantrieb 10 durch einen oberen Bereich 32 des Schmutzfangelements 28 abgedeckt ist. Des Weiteren ist das Schmutzfangelement 28 derart ausgebildet, dass ein weiterer Freiraum unterhalb des Hilfsantriebs 10, das heißt in Richtung einer Fahrbahndecke oder einem Boden ebenfalls zumindest teilweise durch einen unteren Bereich 34 des Schmutzfangelements 28 abgedeckt ist.

Man erkennt, dass das Schmutzfangelement 28 im Bereich zwischen der Antriebseinheit 18 und dem Antriebselement 22 angeordnet ist. Dadurch wird die Antriebseinheit 18 zuverlässig gegenüber dem Rad 16 abgeschirmt, sodass die entsprechenden Komponenten der Antriebseinheit 18 sicher vor Spritzwasser, Schmutz oder dergleichen aus dem Bereich des Rads 16 geschützt sind. Im angeschwenkten Zustand des Hilfsantriebs 10 liegt das Ende des oberen Bereichs 32 des Schmutzfangelements 28 an einer Innenseite 30 des Radkastens 14 an und schließt den Bereich des Rads 16 beziehungsweise des Radkastens 14 zuverlässig gegenüber dem Bereich der Antriebseinheit 18 des Hilfsantriebs 10 ab.

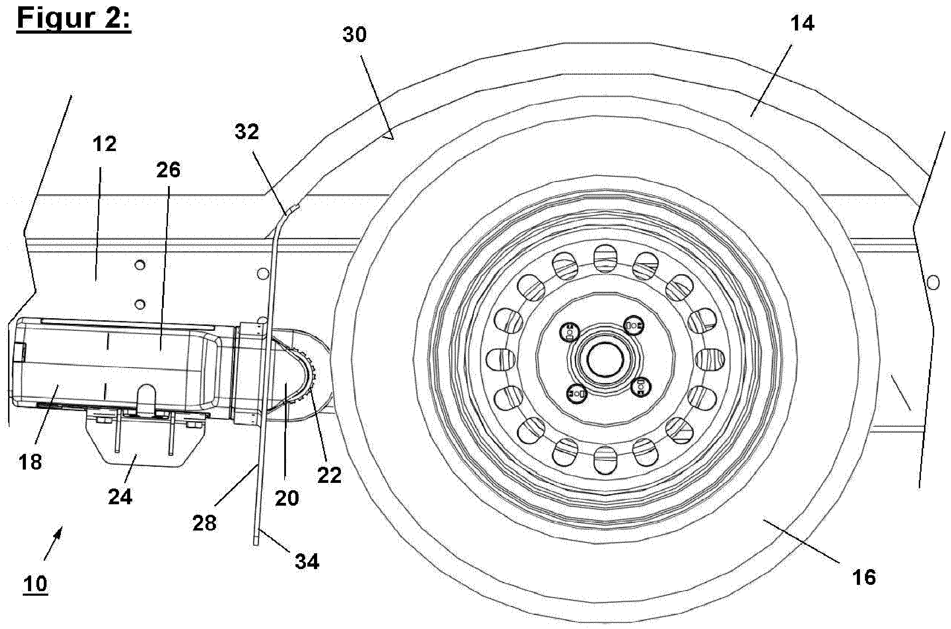

Figur 2 zeigt eine schematische Schnittdarstellung des Hilfsantriebs 10 gemäß Figur 1 in einem abgeschwenkten Zustand. Dabei wird unter einem abgeschwenkten Zustand derjenige Zustand verstanden, in dem das Antriebselement 22, das heißt die Antriebswalze nicht mehr im Eingriff mit der Oberfläche des Rads beziehungsweise Reifens 16 steht. Im abgeschwenkten Zustand des Hilfsantriebs 10 kann der Anhänger an ein Zugfahrzeug angekoppelt werden und entsprechend bewegt werden. Man erkennt, dass sich im abgeschwenkten Zustand des Hilfsantriebs 10 der obere Bereich 32 des Schmutzfangelements 28 an die Innenseite 30 des Radkastens 14 anschmiegt und somit auch in diesem Zustand des Hilfsantriebs 10 eine sichere Abdichtung zwischen dem Bereich des Radkastens 14 beziehungsweise des Rads 16 und der Antriebseinheit 18 beziehungsweise der im Bereich der Antriebseinheit 18 liegenden Bauelemente des Anhängers gewährleistet.

Um das Anliegen des oberen Bereichs 32 des Schmutzfangelements 28 an die Innenseite 30 des Radkastens 14 zu ermöglichen, ist gemäß dem dargestellten Ausführungsbeispiel der in den Radkasten 14 des Anhängers ragende Bereich des Schmutzfangelements 28 zumindest bereichsweise flexibler ausgebildet als die am Hilfsantrieb 10 anliegenden Bereiche des Schmutzfangelements 28. Dadurch kann sich der obere Bereich 32 des Schmutzfangelements 28 vollflächig an die Innenseite 30 des Radkastens 14 anlegen. In dem dargestellten Ausführungsbeispiel ist das Schmutzfangelement 28 als separates Bauteil ausgebildet und am Hilfsantrieb 10 angeordnet. Zur Befestigung des Schmutzfangelements 28 an dem Hilfsantrieb 10 sind verschiedenste Möglichkeiten denkbar. So kann das Schmutzfangelement 28 mit dem Hilfsantrieb 10 verschraubt, verklebt, verschweißt oder auf den Hilfsantrieb 10 aufgesteckt, aufgeschoben, aufgespannt oder aufgeschrumpft oder mit diesem verklemmt werden. Auch andere Befestigungsmöglichkeiten sind denkbar.

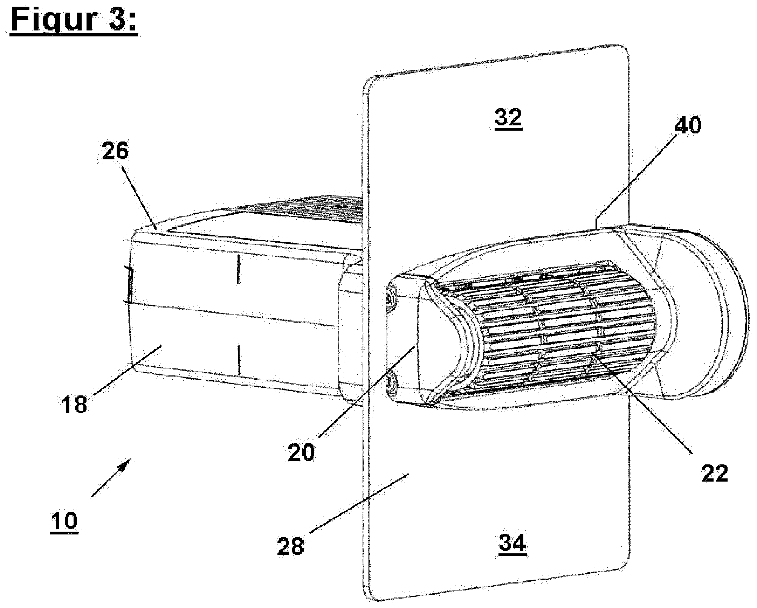

Figur 3 zeigt eine schematische Darstellung eines weiteren Hilfsantriebs 10. Man erkennt, dass das Schmutzfangelement 28 als separates Bauteil ausgebildet ist und im Bereich der Gehäusehalterung 20 für das Antriebselement 22 auf dieses aufgesteckt und damit verklemmt worden ist. Hierzu weist das Schmutzfangelement 28 eine entsprechende Ausnehmung 40 auf, wobei die Ausnehmung 40 eine Innenkontur aufweist, die einer Außenkontur der Gehäusehalterung 20 in diesem Bereich entspricht. Das dargestellte Schmutzfangelement 28 weist wiederum einen oberen und unteren Bereich 32, 34 auf, welche die Freiräume über- und unterhalb des Hilfsantriebs 10 zumindest teilweise abdecken.

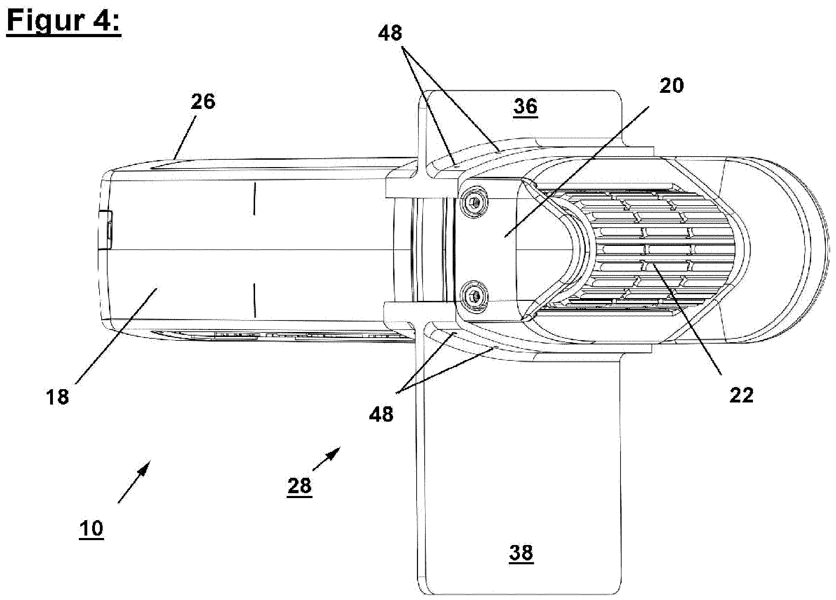

Figur 4 zeigt eine schematische Darstellung eines weiteren Hilfsantriebs 10. Man erkennt, dass bei dieser Ausführungsform das Schmutzfangelement 28 zweiteilig ausgebildet ist. Das Schmutzfangelement 28 umfasst dabei ein oberes Schmutzfangelement 36 und ein unteres Schmutzfangelement 38. Das obere Schmutzfangelement 36 wird in einem Zwischenbereich zwischen der Gehäusehalterung 20 und dem Gehäuse 26 der Antriebseinheit 18 derart mittels Befestigungsvorrichtungen 48 montiert, dass es den Freiraum zwischen dem Hilfsantrieb 18 und dem Anhängerboden oder dem Radkasten 14 des Anhängers zumindest teilweise abdeckt. Das untere Schmutzfangelement 38 wird gegenüberliegend auf der dem Rahmen 12 abgewandten Seite es Anhängers liegenden Unterseite des Hilfsantriebs 10 ebenfalls mittels Befestigungsvorrichtungen 48 befestigt. Das untere Schmutzfangelement 38 bedeckt zumindest teilweise den Freiraum zwischen dem Hilfsantrieb 10 und einer Fahrbahndecke oder Bodenoberfläche.

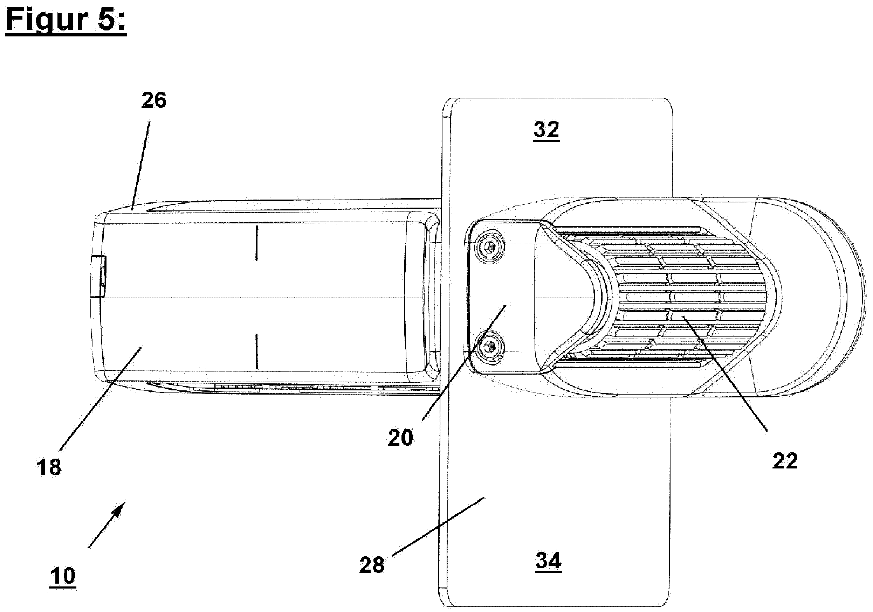

Figur 5 zeigt eine schematische Darstellung eines weiteren Hilfsantriebs 10. Man erkennt, dass das dargestellte Schmutzfangelement 28 einstückig mit der Gehäusehalterung 20 für das Antriebselement 22 ausgebildet ist. Das Schmutzfangelement umfasst wiederum einen oberen und unteren Bereich 32, 34 zur zumindest teilweisen Abdeckung der Freiräume ober- und unterhalb des Hilfsantriebs 10.

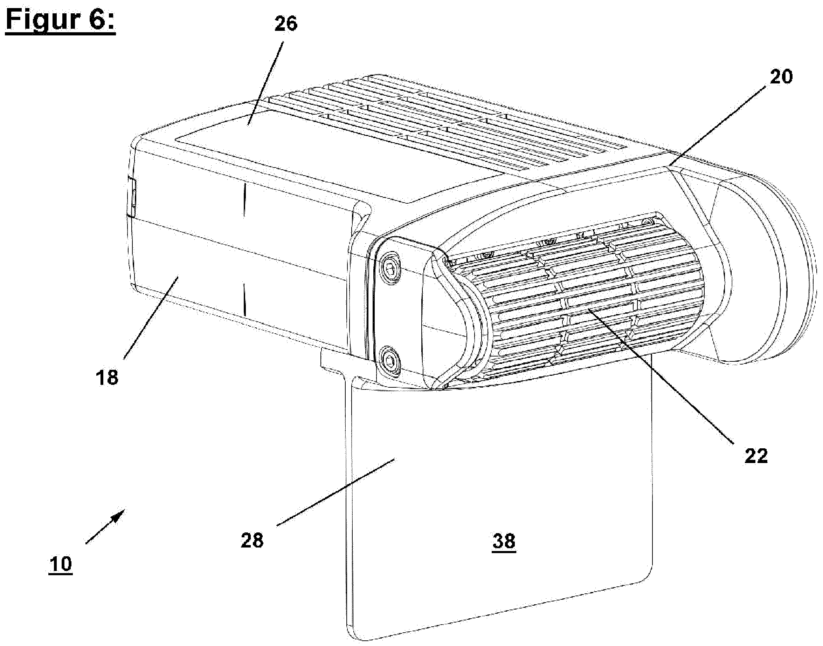

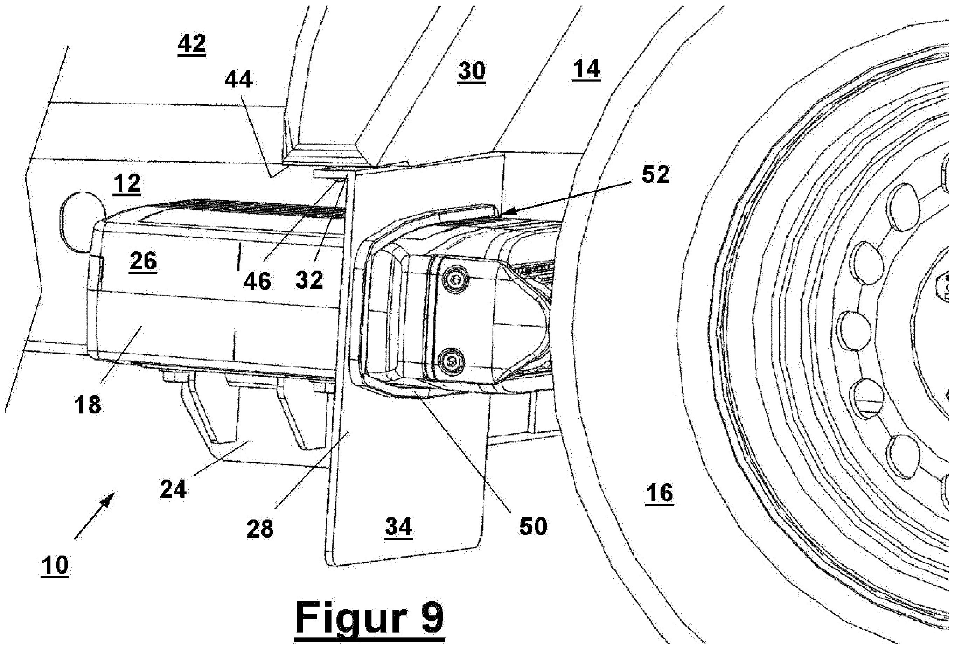

Figur 6 zeigt eine schematische Darstellung eines Hilfsantriebs 10, wobei dieser nicht unter die Erfindung fällt. Diese Variante entspricht im Wesentlichen der in Figur 4 gezeigten Variante des Hilfsantriebs 10. Allerdings besteht das Schmutzfangelement 28 bei der vorliegenden Variante lediglich aus dem unteren Schmutzfangelement 38, welches im Bereich zwischen der Gehäusehalterung 20 und dem Gehäuse 26 im unteren Bereich des Hilfsantriebs 10 befestigt ist. Zur Vervollständigung des Spritz- und Schmutzschutzes kann der Freiraum zwischen dem oberen Bereich, das heißt dem dem Anhänger zugewandten Bereich des Hilfsantriebs 10 und dem Anhängerboden beziehungsweise dem Radkasten 14 des Anhängers mittels einem oder mehreren zusätzlichen Schmutzfangelementen ausgebildet werden, die am Anhänger befestigt sind. Die Befestigung dieser zusätzlichen Schmutzfangelemente kann beispielsweise am Stützrahmen 12, dem Anhängerboden 44 (siehe Figur 9) oder dem Radkasten 14 des Anhängers erfolgen.

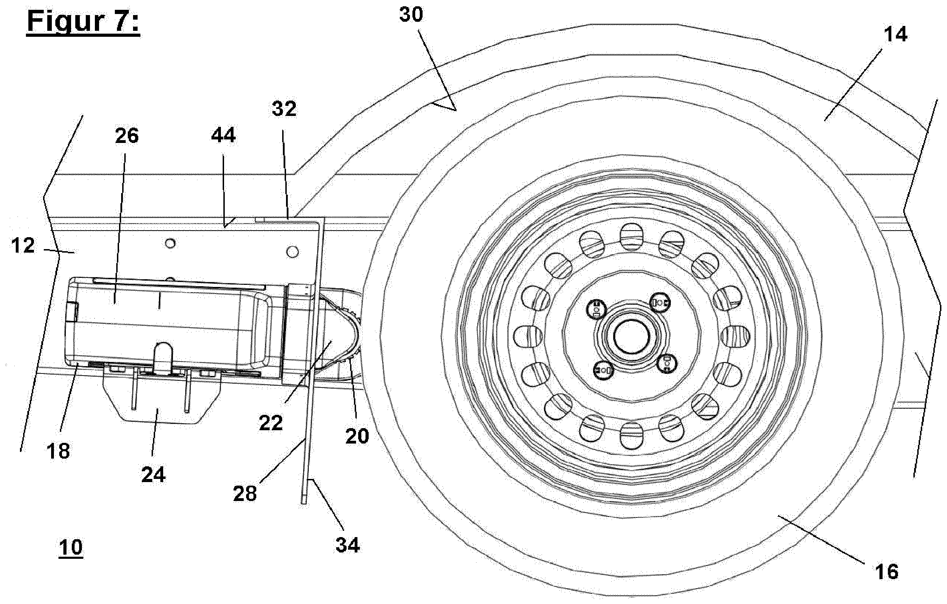

Figur 7 zeigt eine schematische Schnittdarstellung eines weiteren Hilfsantriebs 10 in einem zugeschwenkten Zustand. Man erkennt, dass gemäß diesem nicht-erfindungsgemäßen Ausführungsbeispiel der obere Bereich 32 des Schmutzfangelements 28 nicht in den Radkasten 14 ragt oder an der Innenseite 30 des Radkastens 14 anliegt. Vielmehr ist der obere Bereich 32 abgewinkelt ausgebildet, derart, dass er an einer Außenseite des Anhängerbodens 44 anliegt. Das Schmutzfangelement 28 ist als separates Bauelement ausgebildet und im Bereich zwischen dem Antriebselement 20 und der Antriebseinheit 18 mit der Gehäusehalterung 20 verbunden. Dabei kann der obere Bereich 32 höhenverstellbar ausgebildet sein um sich unterschiedlichen Abständen zwischen dem Hilfsantrieb 10 und dem Anhängerboden 44 anzupassen. Es ist aber auch möglich, die Öffnung bzw. Aussparung, durch die der Hilfsantrieb 10 geführt wird, etwas größer als die Außenkontur des Hilfsantriebs 10 in diesem Bereich auszubilden. Auch hierdurch ergibt sich eine Höhenverstellbarkeit des Schmutzfangelements 28. Die genannte Höhenverstellbarkeit kann natürlich bei allen als separate Bauelemente ausgebildeten Schmutzfangelementen 28 oder Teileelementen 32, 34, 36, 38 ausgebildet sein. Es ist aber auch möglich, dass das Schmutzfangelement 28 mit zum Beispiel der Gehäusehalterung 20 einstückig ausgebildet ist.

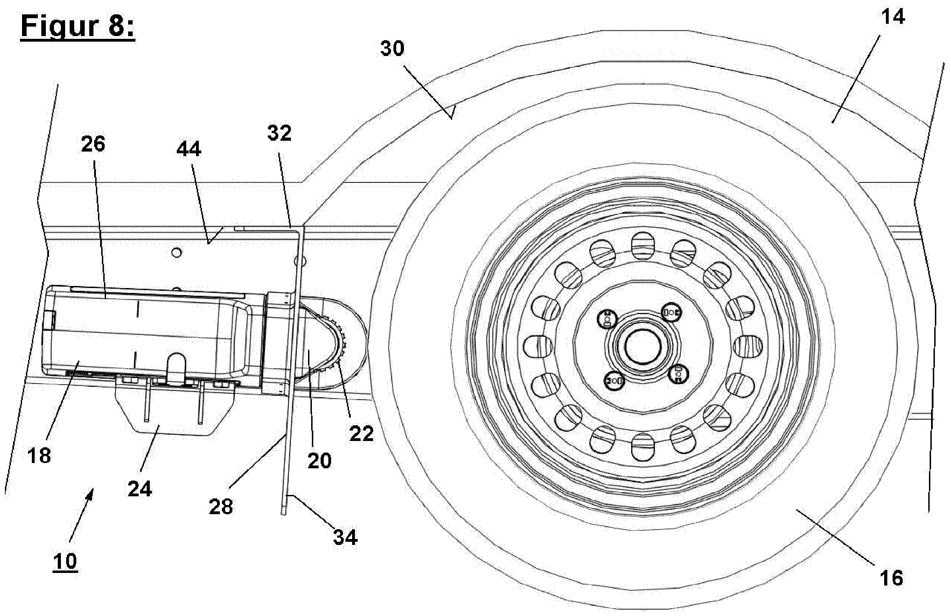

Figur 8 zeigt eine schematische Schnittdarstellung des Hilfsantriebs 10 gemäß Figur 7 in einem abgeschwenkten Zustand. Man erkennt, dass der abgewinkelte obere Bereich 32 des Schmutzfangelements 28 weiterhin am Anhängerboden 44 anliegt und durch die entsprechende Bewegung des Hilfsantriebs 10 an dem Anhängerboden 44 geführt wird. Auch im abgeschwenkten Zustand des Hilfsantriebs 10 ist eine sichere Abdichtung des Bereichs des Rads 16 von den in Richtung der Antriebseinheit 18 liegenden Bereichen des Anhängers gegeben.

Figur 9 zeigt eine schematische Darstellung eines weiteren Hilfsantriebs 10 in zugeschwenkten Zustand. Gemäß dieser nicht-erfindungsgemäßen Ausführungsform ist das Schmutzfangelement 28 in seinem oberen Bereich 32 über eine Befestigungsvorrichtung 46 mit einem Chassis 42 beziehungsweise dem Anhängerboden 44 lösbar verbunden. Das Schmutzfangelement 28 ist wiederum als separates Bauteil ausgebildet und weist eine Öffnung beziehungsweise Aussparung 52 auf, die derart ausgebildet ist, dass der Hilfsantrieb 10 durch sie führbar ist. Dabei entspricht die Innenkontur der Aussparung 52 im Wesentlichen einer Außenkontur des Hilfsantriebs 10 im Kontaktbereich zwischen der Aussparung 52 und dem Hilfsantrieb 10. Des Weiteren ist erkennbar, dass die Öffnung beziehungsweise Aussparung 52 zumindest teilweise mit einer Dichtlippe 50 umgeben ist. Im abgeschwenkten Zustand des Hilfsantriebs 10 wird die Öffnung 52 vollständig durch den Hilfsantrieb 10 beziehungsweise die in diesem Bereich angeordneten Bauelemente des Hilfsantriebs 10 abgedeckt. In zugeschwenkten des Hilfsantriebs 10 wird die Öffnung 52 zumindest teilweise durch den Hilfsantrieb 10 beziehungsweise die in diesem Bereich angeordneten Bauelemente des Hilfsantriebs 10 abgedeckt. Zustand Diese nicht-erfindungsgemäße Ausführungsform eignet sich insbesondere für einen nachträglichen Einbau des Schmutzfangelements 28 bei bestehendem Hilfsantrieb 10.

Das in Figur 9 gezeigte Schmutzfangelement 28 kann auch mehrteilig, zum Beispiel zweiteilig ausgebildet sein. Dabei kann ein oberes Schmutzfangelement mit dem Anhänger wie beschrieben verbunden sein und den Freiraum zwischen dem Anhängerboden oder einer Innenseite des Radkastens und der Oberseite, d.h. der dem Anhängerboden zugewandten Seite des Hilfsantriebs 10 zumindest teilweise abdecken. An der von dem Anhängerboden abgewandten Seite, d.h. der Unterseite des Hilfsantriebs 10 ist ein entsprechendes unteres Schmutzfangelement angeordnet und deckt zumindest teilweise den Freiraum zwischen der Unterseite des Hilfsantriebs 10 und dem Boden ab. Die Öffnung beziehungsweise Aussparung 52 kann dabei ganz oder jeweils teilweise in dem oberen oder unteren Schmutzfangelement ausgebildet sein.

Die im Vorhergehenden beschriebenen Schmutzfangelemente 28 bestehen üblicherweise aus Kunststoff, Metall, Gummi oder einer Kombination von mindestens zwei dieser Materialien. Auch andere Materialien sind denkbar.

## Patentansprüche

1. Anhänger, umfassend mindestens einen Hilfsantrieb (10), wobei der Hilfsantrieb (10) an einem Rahmen (12) des Anhängers angeordnet ist und mindestens ein Antriebselement (22) umfasst, wobei das Antriebselement (22) mit einem Rad (16) des Anhängers in Eingriff bringbar ist und der Hilfsantrieb (10) mindestens eine Antriebseinheit (18) zum Antrieb des mindestens einen Antriebselementes (22) aufweist und mindestens ein Schmutzfangelement (28) umfasst, wobei das Schmutzfangelement (28) im Bereich zwischen der Antriebseinheit (18) und dem Antriebselement (22) angeordnet ist, derart, dass zumindest ein Freiraum zwischen der Antriebseinheit (10) und dem Anhängerboden oder einem Radkasten (14) des Anhängers zumindest teilweise abgedeckt ist, **dadurch gekennzeichnet, dass** ein in den Radkasten (14) des Anhängers ragender Bereich des Schmutzfangelements (28) zumindest bereichsweise einer Kontur einer Innenseite (30) des Radkastens (14) in diesem Bereich angepasst ist.

2. Anhänger nach Anspruch 1, **dadurch gekennzeichnet, dass** das Schmutzfangelement (28) derart ausgebildet ist, dass es die Antriebseinheit (18) des Hilfsantriebs (10) zumindest teilweise umschließt.

3. Anhänger nach Anspruch 1 oder 2, **dadurch gekennzeichnet, dass** der in den Radkasten (14) ragende Bereich des Schmutzfangelements (28) bei einem Nichtanliegen des Antriebselements (22) an dem Rad (16) an der Innenseite (30) des Radkastens (14) in diesem Bereich vollflächig anliegt.

4. Anhänger nach einem der vorhergehenden Ansprüche, **dadurch gekennzeichnet, dass** zumindest ein in den Radkasten (14) des Anhängers ragender Bereich des Schmutzfangelements (28) oder ein an einem Anhängerboden (44) anliegender Bereich des Schmutzfangelements (28) zumindest bereichsweise flexibler ausgebildet ist als die am Hilfsantrieb (10) anliegenden Bereiche des Schmutzfangelements (28) und/oder als ein von dem Hilfsantrieb (10) bodenseitig abragender Bereich des Schmutzfangelements (28).

5. Anhänger nach einem der vorhergehenden Ansprüche, **dadurch gekennzeichnet, dass** das Schmutzfangelement (28) als separates Bauteil ausgebildet ist und am Hilfsantrieb (10) angeordnet ist, wobei das Schmutzfangelement (28) mit dem Hilfsantrieb (10) verschraubt, verklebt, verschweißt ist oder auf den Hilfsantrieb (10) aufgesteckt, aufgeschoben, aufgespannt oder aufgeschrumpft oder mit diesem verklemmt ist.

6. Anhänger nach einem der vorhergehenden Ansprüche, **dadurch gekennzeichnet, dass** der Hilfsantrieb (10) mindestens eine Montagevorrichtung (24) zur Befestigung des Hilfsantriebs (10) aufweist, wobei das Schmutzfangelement (28) an der Montagevorrichtung (24) angeordnet ist.

7. Anhänger nach einem der Ansprüche 1 bis 4, **dadurch gekennzeichnet, dass** das Schmutzfangelement (28) einstückig mit dem Hilfsantrieb (10) ausgebildet ist.

8. Anhänger nach Anspruch 7, **dadurch gekennzeichnet, dass** das Schmutzfangelement (28) einstückig mit einem Gehäuse des Hilfsantriebs (10) oder einem Gehäuse (26) der Antriebseinheit (18), einer Halterung oder einem Gehäuse (20) des Antriebselements (22) oder einem eine Anpresskraft auf das Rad (16) übertragendes Gehäuseelement des Hilfsantriebs (10) ausgebildet ist.

9. Anhänger nach einem der Ansprüche 1 bis 4, **dadurch gekennzeichnet, dass** das Schmutzfangelement (28) mit dem Anhänger verbunden ist und mindestens eine Öffnung und/oder Aussparung (52) umfasst, wobei der Hilfsantrieb (10) durch die Öffnung und/oder Aussparung (52) führbar ist und eine Innenkontur der Öffnung und/oder Aussparung (52) im Wesentlichen einer Außenkontur des Hilfsantriebs (10) im Kontaktbereich zwischen der Öffnung und/oder Aussparung (52) und dem Hilfsantrieb (10) entsprechend ausgebildet ist.

10. Anhänger nach einem der Ansprüche 1 bis 9, welcher ein Wohnwagen, Bootsanhänger, Verkaufswagen, Transportanhänger oder Autotransportanhänger ist.

## Claims

1. A trailer comprising at least one auxiliary drive (10) , wherein the auxiliary drive (10) is arranged at a frame (12) of the trailer and includes at least one drive element (22), wherein the drive element (22) can be engaged with a wheel (16) of the trailer and the auxiliary drive (10) comprises at least one drive unit (18) for driving the at least one drive element (22) and includes at least one dirt trap element (28), wherein the dirt trap element (28) is arranged in the area between the drive unit (18) and the drive element (22) such that at least a clearance between the drive unit (10) and the trailer floor or a wheel case (14) of the trailer is at least partially covered, **characterized in that** an area of the dirt trap element (28) protruding into the wheel case (14) of the trailer at least in certain areas is adapted to a contour of an inner side (30) of the wheel case (14) in this area.

2. The trailer according to claim 1, **characterized in that** the dirt trap element (28) is formed such that it at least partially encloses the drive unit (18) of the auxiliary drive (10).

3. The trailer according to claim 1 or 2, **characterized in that** the area of the dirt trap element (28) protruding into the wheel case (14) abuts on the inner side (30) of the wheel case (14) in this area over the entire surface upon nonabutment of the drive element (22) on the wheel (16).

4. The trailer according to any one of the preceding claims, **characterized in that** at least an area of the dirt trap element (28) protruding into the wheel case (14) of the trailer or an area of the dirt trap element (28) abutting on a trailer floor (44) is formed more flexibly at least in certain areas than the areas of the dirt trap element (28) abutting on the auxiliary drive (10) and/or than an area of the dirt trap element (28) protruding away from the auxiliary drive (10) on the floor side.

5. The trailer according to any one of the preceding claims, **characterized in that** the dirt trap element (28) is formed as a separate component and is arranged at the auxiliary drive (10), wherein the dirt trap element (28) is screwed, adhered, welded to the auxiliary drive (10) or is fitted, shifted, chucked or shrunk onto the auxiliary drive (10) or clamped with it.

6. The trailer according to any one of the preceding claims, **characterized in that** the auxiliary drive (10) comprises at least one mounting device (24) for fixing the auxiliary drive (10), wherein the dirt trap element (28) is arranged at the mounting device (24).

7. The trailer according to any one of claims 1 to 4, **characterized in that** the dirt trap element (28) is formed integrally with the auxiliary drive (10).

8. The trailer according to claim 7, **characterized in that** the dirt trap element (28) is formed integrally with a housing of the auxiliary drive (10) or a housing (26) of the drive unit (18), a bracket or a housing (20) of the drive element (22) or a housing element of the auxiliary drive (10) transferring a pressing force to the wheel (16).

9. The trailer according to any one of claims 1 to 4, **characterized in that** the dirt trap element (28) is connected to the trailer and includes at least one opening and/or recess (52), wherein the auxiliary drive (10) can be passed through the opening and/or recess (52) and an inner contour of the opening and/or recess (52) is formed substantially corresponding to an outer contour of the auxiliary drive (10) in the contact area between the opening and/or recess (52) and the auxiliary drive (10).

10. The trailer according to any one of claims 1 to 9, which is a caravan, boat trailer, sales vehicle, transport trailer or car transport trailer.

## Revendications

1. Remorque, comprenant au moins un groupe propulseur auxiliaire (10), le groupe propulseur auxiliaire (10) étant disposé sur un châssis (12) de la remorque et comportant au moins un élément d'entraînement (22), l'élément d'entraînement (22) pouvant être amené en prise avec une roue (16) de la remorque et le groupe propulseur auxiliaire (10) possédant au moins une unité d'entraînement (18) destinée à entraîner l'au moins un élément d'entraînement (22) et au moins un élément garde-boue (28), l'élément garde-boue (28) étant disposé dans la zone entre l'unité d'entraînement (18) et l'élément d'entraînement (22) de telle sorte qu'au moins un espace libre entre l'unité d'entraînement (10) et le plancher de la remorque ou un passage de roue (14) de la remorque est au moins partiellement recouvert, **caractérisée en ce qu'**une zone de l'élément garde-boue (28) qui fait saillie dans le passage de roue (14) de la remorque est adaptée au moins dans certaines zones à un contour d'un côté intérieur (30) du passage de roue (14) dans cette zone.

2. Remorque selon la revendication 1, **caractérisée en ce que** l'élément garde-boue (28) est configuré de telle sorte qu'il entoure au moins partiellement l'unité d'entraînement (18) du groupe propulseur auxiliaire (10).

3. Remorque selon la revendication 1 ou 2, **caractérisée en ce que** lorsque l'élément d'entraînement (22) n'est pas appliqué contre la roue (16), la zone de l'élément garde-boue (28) qui fait saillie dans le passage de roue (14) repose sur toute la surface contre le côté intérieur (30) du passage de roue (14) dans cette zone.

4. Remorque selon l'une des revendications précédentes, **caractérisée en ce qu'**au moins une zone de l'élément garde-boue (28) qui fait saillie dans le passage de roue (14) de la remorque ou une zone de l'élément garde-boue (28) qui repose contre un plancher de remorque (44) est réalisée, au moins dans certaines zones, plus flexible que les zones de l'élément garde-boue (28) qui reposent contre le groupe propulseur auxiliaire (10) et/ou qu'une zone de l'élément garde-boue (28) qui fait saillie du groupe propulseur auxiliaire (10) du côté du plancher.

5. Remorque selon l'une des revendications précédentes, **caractérisée en ce que** l'élément garde-boue (28) est réalisé sous la forme d'un élément structural distinct et est disposé sur le groupe propulseur auxiliaire (10), l'élément garde-boue (28) étant vissé, collé, soudé au groupe propulseur auxiliaire (10) ou étant emboîté, enfilé, bridé ou emmanché sur le groupe propulseur auxiliaire (10) ou serré avec celui-ci.

6. Remorque selon l'une des revendications précédentes, **caractérisée en ce que** le groupe propulseur auxiliaire (10) possède au moins un dispositif de montage (24) destiné à fixer le groupe propulseur auxiliaire (10), l'élément garde-boue (28) étant disposé sur le dispositif de montage (24).

7. Remorque selon l'une des revendications 1 à 4, **caractérisée en ce que** l'élément garde-boue (28) est réalisé d'un seul tenant avec groupe propulseur auxiliaire (10).

8. Remorque selon la revendication 7, **caractérisée en ce que** l'élément garde-boue (28) est réalisé d'un seul tenant avec un carter du groupe propulseur auxiliaire (10) ou un carter (26) de l'unité d'entraînement (18), un élément de maintien ou un carter (20) de l'élément d'entraînement (22) ou un élément de carter du groupe propulseur auxiliaire (10) qui transmet une force de pressage sur la roue (16).

9. Remorque selon l'une des revendications 1 à 4, **caractérisée en ce que** l'élément garde-boue (28) est relié à la remorque et comporte au moins une ouverture et/ou une cavité (52), le groupe propulseur auxiliaire (10) pouvant être passé à travers l'ouverture et/ou la cavité (52) et un contour intérieur de l'ouverture et/ou de la cavité (52) étant configuré sensiblement en correspondance avec un contour extérieur du groupe propulseur auxiliaire (10) dans la zone de contact entre l'ouverture et/ou la cavité (52) et le groupe propulseur auxiliaire (10).

10. Remorque selon l'une des revendications 1 à 9, laquelle est une caravane, une remorque à bateau, une voiture-échoppe, une remorque de transport ou une remorque de transport d'automobile.
